(19) Europäisches Patentamt
European Patent Office
Office européen des brevets

(11) **EP 2 746 787 A1**

(12) **EUROPEAN PATENT APPLICATION**
published in accordance with Art. 153(4) EPC

(43) Date of publication:
**25.06.2014 Bulletin 2014/26**

(51) Int Cl.:
**G01R 22/00** (2006.01)     **H02J 3/00** (2006.01)

(21) Application number: **12854469.9**

(86) International application number:
**PCT/JP2012/072404**

(22) Date of filing: **04.09.2012**

(87) International publication number:
**WO 2013/080619 (06.06.2013 Gazette 2013/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2011 JP 2011262444**

(71) Applicant: **Panasonic Corporation
Osaka 571-8501 (JP)**

(72) Inventors:
• **SHIMIZU, Noriyoshi
Osaka-shi, Osaka 540-6207 (JP)**

• **NISHIYAMA, Takashi
Osaka-shi, Osaka 540-6207 (JP)**
• **NAKAHARA, Tomoharu
Osaka-shi, Osaka 540-6207 (JP)**

(74) Representative: **Appelt, Christian W.
Boehmert & Boehmert
Pettenkoferstrasse 20-22
80336 München (DE)**

(54) **ENERGY MANAGEMENT DEVICE AND PROGRAM**

(57)     Acquiring unit acquires, as power usage amount, amount of power for each measurement time, for each of branch lines through which power is fed to electrical loads, respectively. History storage unit stores a plurality of power usage amounts for each branch line so that each amount is made to correspond to time and date when acquired. Analyzing unit calculates frequency distribution of magnitudes of power usage amounts during target period, of the plurality of power usage amounts in history storage unit, and estimates that power usage amount in which cumulative relative frequency from lower limit of power usage amount is frequency threshold or more is amount of standby power. Analyzing unit determines whether electrical load corresponding to each branch line is in operation by setting standby power to reference value and comparing reference value with magnitude of power usage amount. Determined result is displayed on display device.

Fig. 1

## Description

TECHNICAL FIELD

The invention relates to an energy management device and a program, which manage an operation state of an electrical load.

BACKGROUND ART

Conventionally, there has been known a technique of managing an operation state of an electrical load arranged in a space, such as a residence, based on the amount of electric power consumed by the electrical load (e.g., see Japanese Published Unexamined Patent Application No. 2011-160358).

An energy usage information providing system described in the above-mentioned document is configured to measure the amount of electric power flowing through a line of a branch breaker arranged in a distribution board, and display information indicating the measured amount of electric power so as to be visually made to correspond to a floor plan of a room in a residence, on a display screen.

Here, recently, there has been increased the number of electrical loads, which consume small power even when not being used, such as an electrical load provided with a remote control apparatus, or an electrical load as a communication apparatus. That is, this type of electrical load consumes standby power, even when not being used (when not being operated). In addition, because standby powers of electrical loads vary depending on the types thereof, there is a case where it is impossible to clearly distinguish whether the electrical load is in operation or non-operation by only measuring the amount of electric power flowing through the line of the branch breaker.

DISCLOSURE OF THE INVENTION

It is an object of the present invention to provide an energy management devices and a program, which can clearly distinguish whether an electrical load is in operation or non-operation by detecting standby power of the electrical load and determining whether or not the electrical load is in operation based on the standby power.

An energy management device according to the present invention includes: an acquiring unit configured to acquire, as a power usage amount, an amount of electric power for each prescribed measurement time, for each of feed lines through which electric power is fed to electrical loads, respectively; a history storage unit configured to store a plurality of power usage amounts for each of the feed lines so that each of the plurality of power usage amounts is made to correspond to a time and a date when acquired; an analyzing unit configured to calculate a frequency distribution of magnitudes of power usage amounts during a predetermined target period, of the plurality of power usage amounts for each of the feed lines stored in the history storage unit, and estimate that a specific power usage amount, in which a relative frequency is a prescribed frequency threshold or more, of the power usage amounts corresponds to an amount of standby power, the analyzing unit being configured to determine whether or not an electrical load corresponding to each of the feed lines is in operation by setting the estimated amount of standby power to a reference value and comparing the reference value with a magnitude of the power usage amount; and an output processing unit configured to make a notification unit present a result determined by the analyzing unit.

According to this configuration, because the energy management device detects standby power of an electrical load and determines whether or not the electrical load is in operation based on the standby power, it is possible to clearly distinguish whether the electrical load is in operation or non-operation.

In the energy management device, preferably, the output processing unit is configured to display, on a display device, a floor plan of a space where the electrical loads are arranged, and display, in the floor plan, information relating to the power usage amount for each of the feed lines acquired by the acquiring unit.

Preferably, the energy management device further includes a setting information storage unit in which setting information is set as a reference with respect to operation of each of the electrical loads. In this case, preferably, the analyzing unit is configured to determine a use state of each of the electrical loads, by comparing information extracted from the power usage amount acquired by the acquiring unit with the setting information set in the setting information storage unit.

In the energy management device, preferably, the analyzing unit is configured to determine, as the use state, whether or not each of the electrical loads is being wastefully used, by comparing the information extracted from the power usage amount acquired by the acquiring unit with the setting information set in the setting information storage unit.

In the energy management device, preferably, the setting information is a power reference value that is defined for the power usage amount, and the analyzing unit is configured to instruct, when the power usage amount acquired by the acquiring unit reaches the power reference value, the output processing unit to make the notification unit present a result.

Preferably, the energy management device further includes a load controller configured to control the operation of each of the electrical loads. In this case, preferably, the setting information is a peak-cut value that is defined for the power usage amount, and the analyzing unit is configured to instruct, when the power usage amount acquired by the acquiring unit reaches the peak-cut value, the load controller to control operation of a corresponding electrical load in a direction where the power usage amount is reduced.

In the energy management device, preferably, the analyzing unit is configured to: extract, from the feed lines, a feed line to which an electrical load being in operation is connected, based on the power usage amount for each of the feed lines, acquired by the acquiring unit; and instruct the output processing unit to make the notification unit present a space that is made to correspond to the extracted feed line.

Preferably, the energy management device further includes a type storage unit in which a type of a corresponding electrical load for each of the feed lines is registered. In this case, preferably, the analyzing unit is configured to: predict an estimated time when operation of a specific type of an electrical load extracted with the type storage unit is habitually started, based on a time change of the plurality of power usage amounts stored in the history storage unit for a feed line to which the specific type of the electrical load is connected; determine, in a case where the specific type of the electrical load has been instructed to be stopped before the estimated time, which of a total amount of power usage amounts in a processing of stopping the specific type of the electrical load and a total amount of power usage amounts in a processing of continuously operating the specific type of the electrical load is less than an other, based on a time difference between a time when the specific type of the electrical load has been instructed to be stopped and the estimated time; and instruct the output processing unit to make the notification unit present the processing in which the total amount of the power usage amounts is less than the other.

In the energy management device, preferably, the analyzing unit is configured to: categorize the electrical loads to which the electric power is fed through the feed lines respectively, into a first electrical load of which a magnitude of starting power is equal to or more than a prescribed value for steady power thereof and a second electrical load of which a magnitude of starting power is less than the prescribed value for steady power thereof, based on a time change of the plurality of power usage amounts stored in the history storage unit; extract, as an estimated time, a time when the first electrical load is habitually utilized, based on a time change of the plurality of power usage amounts stored in the history storage unit for a feed line to which the first electrical load is connected; determine, in a case where the first electrical load has been instructed to be stopped before the estimated time, which of a total amount of power usage amounts in a processing of stopping the first electrical load and a total amount of power usage amounts in a processing of continuously operating the first electrical load is less than an other; and instruct the output processing unit to make the notification unit present the processing in which the total amount of the power usage amounts is less than the other.

In the energy management device, preferably, the history storage unit is configured to: store a history of instructing by the analyzing unit the output processing unit to make the notification unit present the processing in which the total amount of the power usage amounts is less than the other; and retrieve the history.

In the energy management device, preferably, the analyzing unit is configured to: calculate a feature amount that is extracted from a time change of the plurality of power usage amounts for each of the feed lines; and compare the feature amount with a feature amount calculated before to detect presence or absence of malfunction in the electrical loads to which the electric power is fed through the feed lines respectively.

A program according to the present invention makes a computer function as: an acquiring unit configured to acquire, as a power usage amount, an amount of electric power for each prescribed measurement time, for each of feed lines through which electric power is fed to electrical loads, respectively; a history storage unit configured to store a plurality of power usage amounts for each of the feed lines so that each of the plurality of power usage amounts is made to correspond to a time and a date when acquired; an analyzing unit configured to calculate a frequency distribution of magnitudes of power usage amounts during a predetermined target period, of the plurality of power usage amounts for each of the feed lines stored in the history storage unit, and estimate that a specific power usage amount, in which a relative frequency is a prescribed frequency threshold or more, of the power usage amounts corresponds to an amount of standby power, the analyzing unit being configured to determine whether or not an electrical load corresponding to each of the feed lines is in operation by setting the estimated amount of standby power to a reference value and comparing the reference value with a magnitude of the power usage amount; and an output processing unit configured to make a notification unit present a result determined by the analyzing unit.

BRIEF DESCRIPTION OF THE DRAWINGS

Preferred embodiments of the invention will now be described in further details. Other features and advantages of the present invention will become better understood with regard to the following detailed description and accompanying drawings where:

Fig. 1 is a block diagram illustrating an energy management device according to First Embodiment of the present invention;
Fig. 2 is a diagram illustrating an example of changes in power usage amounts in the energy management device according to the First Embodiment of the present invention;
Fig. 3 is a diagram illustrating an example of a frequency distribution calculated in the energy management device according to the First Embodiment of the present invention;
Fig. 4 is a diagram illustrating a processing of calculating standby power in the energy management device according to the First Embodiment of the present invention;

Fig. 5 is a diagram illustrating an example of displaying on a display device in the energy management device according to the First Embodiment of the present invention;

Fig. 6 is a diagram illustrating a processing of determining whether the power usage amount is excessive in the energy management device according to the First Embodiment of the present invention;

Fig. 7 is a block diagram illustrating an energy management device according to Second Embodiment of the present invention;

Fig. 8A is a diagram illustrating an operational example of an energy management device according to Third Embodiment of the present invention;

Fig. 8B is a diagram illustrating an operational example of the energy management device according to the Third Embodiment of the present invention;

Fig. 8C is a diagram illustrating an operational example of the energy management device according to the Third Embodiment of the present invention;

Fig. 9 is a diagram illustrating an example of displaying on a display device in the energy management device according to the Third Embodiment of the present invention;

Fig. 10A is a diagram illustrating an operational example of an energy management device according to Fourth Embodiment of the present invention;

Fig. 10B is a diagram illustrating an operational example of the energy management device according to the Fourth Embodiment of the present invention;

Fig. 11A is a diagram illustrating another operational example of the energy management device according to the Fourth Embodiment of the present invention;

Fig. 11B is a diagram illustrating another operational example of the energy management device according to the Fourth Embodiment of the present invention;

Fig. 12A is a diagram illustrating yet another operational example of the energy management device according to the Fourth Embodiment of the present invention;

Fig. 12B is a diagram illustrating yet another operational example of the energy management device according to the Fourth Embodiment of the present invention;

Fig. 12C is a diagram illustrating yet another operational example of the energy management device according to the Fourth Embodiment of the present invention;

Fig. 13 is a diagram illustrating a principal of the energy management device according to the Fourth Embodiment of the present invention;

Fig. 14A is a diagram illustrating a processing of detecting deterioration or malfunction of an electrical load in the energy management device according to the Fourth Embodiment of the present invention;

Fig. 14B is a diagram illustrating a processing of detecting deterioration or malfunction of the electrical load in the energy management device according to the Fourth Embodiment of the present invention; and

Fig. 14C is a diagram illustrating a processing of detecting deterioration or malfunction of the electrical load in the energy management device according to the Fourth Embodiment of the present invention.

## BEST MODE FOR CARRYING OUT THE INVENTION

(First Embodiment)

An energy management device described below is capable of acquiring a power usage amount for each of branch lines which are branched from a main line in a distribution board, and is also capable of acquiring a power usage amount for each of electric lines which are further branched from a branch line. In short, the energy management device is capable of acquiring a power usage amount, for each of feed lines through which electric power is fed to electrical loads, respectively.

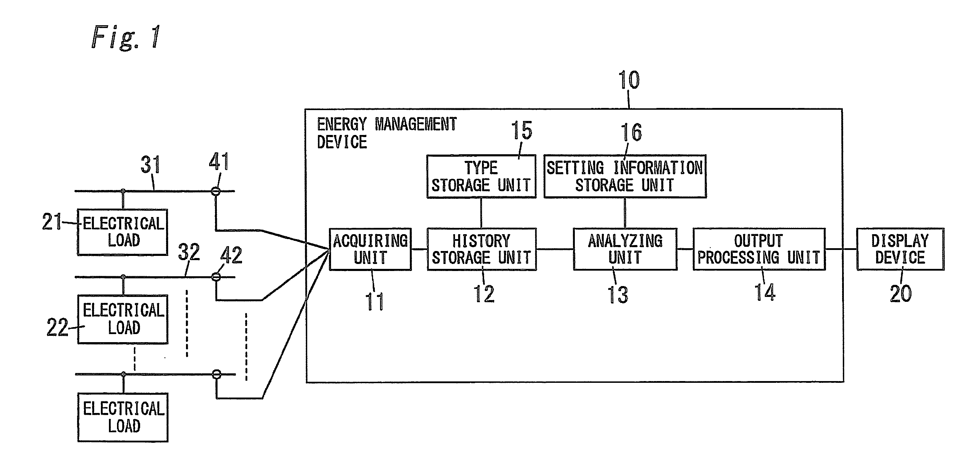

As shown in Fig. 1, electrical loads 21, 22, ... are connected to branch lines 31, 32, ..., respectively, and electric power is fed to the electrical loads through the branch lines 31, 32, .... Further, measurement units 41, 42, ... are arranged at the branch lines 31, 32, ... and are configured to measure power usage amounts in the electrical loads 21, 22, ... corresponding to the branch lines 31, 32, ..., respectively. In the embodiment described below, a term of "power usage amount" means that an amount of electric power acquired by each of the measurement units 41, 42, ... for each prescribed measurement time (e.g., 1 minute). The power usage amount may be calculated by not each of the measurement units 41, 42, ..., but an energy management device 10 described later. That is, each of the measurement units 41, 42, ... may be configured to measure only instantaneous power values, and the energy management device 10 may be configured to calculate, as the power usage amount, an integrated value obtained by integrating the instantaneous power values for the measurement time.

The energy management device 10 realizes a function described later by operating a processor according to a program. That is, the energy management device 10 is configured by, as a hardware element, a device including a processor selected from a microcomputer, a DSP (Digital Signal Processor), a FPGA (Field-Programmable Gate Array) and the like. The energy management device 10 further includes a storage device. The storage device may be a device with a moving unit, such as a hard disk drive, and more preferably, may be a semiconductor memory.

The energy management device 10 further includes an acquiring unit 11 that is configured to acquire power usage amounts measured by the measurement units 41, 42, ... at the branch lines 31, 32, ..., respectively. A plurality of power usage amounts acquired by the acquiring unit 11 for each of the branch lines 31, 32, ... are stored in a history storage unit 12 together with a time and a date when each power usage amount is acquired. The energy management device 10 further has a function (not shown) of clocking a current time. Other information recorded in the history storage unit 12 will be described later. Data recorded in the history storage unit 12 is analyzed by an analyzing unit 13.

The analyzing unit 13 is configured to calculate a frequency distribution of magnitudes of power usage amounts during each predetermined target period (e.g., one day), of the plurality of power usage amounts for each of the branch lines stored in the history storage unit 12. That is, the analyzing unit 13 is configured to divide the magnitudes of the power usage amounts into sections, each of which has a certain width (e.g., 2W·m), and calculate a frequency during the predetermined target period for each section. Further, the analyzing unit 13 is configured to calculate a relative frequency in each section, based on the calculated frequency distribution.

The analyzing unit 13 is configured to determine presence or absence of standby power, based on the relative frequency in each section for the power usage amount, and calculate a magnitude of the standby power when the standby power is consumed. In addition to calculating the magnitude of the standby power, the analyzing unit 13 is configured to determine a use state of each of the electrical loads 21, 22, ..., based on information extracted from the power usage amount acquired by the acquiring unit 11, and information extracted from the data stored in the history storage unit 12. This function will be described later.

A result determined by the analyzing unit 13 is presented by a display device 20, as a notification unit, through an output processing unit 14. The output processing unit 14 is configured to generate image data that defines a content displayed on a screen of the display device 20, and make the display device 20 present the content based on the generated image data including the result determined by the analyzing unit 13. The display device 20 is configured by a dot matrix type of a display device, such as a liquid crystal display device or an organic EL display device. Regarding the notification unit, a speaker, a buzzer or the like that auditorily performs the notification may be arranged in addition to an indicating light such as a light emitting diode, and the display device 20. Further, the display device 20 is preferably configured by a touch panel. That is, the display device 20 is preferably configured so as to function also as an operation unit that accepts an input operation.

Here, the branch lines 31, 32, ... are not necessarily arranged so as to correspond to types of the electrical loads 21, 22, ..., but actually, are often arranged so as to correspond to types (or functions) of the electrical loads 21, 22, ..., respectively.

For example, if an electrical load of the electrical loads 21, 22, ... is an air conditioner, an electromagnetic cooking apparatus or a microwave oven, in which the power usage amount is relatively large, a dedicated branch line of the branch lines 31, 32, ... is often arranged so as to correspond to the electrical load. If the branch lines 31, 32, ... are arranged in unit of rooms of a residence, a lighting apparatus of the electrical loads 21, 22, ... in a room is often fixedly connected to a corresponding branch line of the branch lines 31, 32, .... Even in a case where an electrical load of the electrical loads 21, 22, ... is connected to an outlet, there is a high possibility that if the electrical load is a refrigerator, a sound video image apparatus (a television receiver, an audio apparatus or the like), an information apparatus (a telephone, a computer or the like) or the like, it is continuously connected to a corresponding branch line of the branch lines 31, 32, ... over a long period.

As the examples described above, since the types of the electrical loads 21, 22, ... respectively connected to the branch lines 31, 32, ... are approximately determined, the power usage amounts measured by the measurement units 41, 42, ... can be approximately made to respectively correspond to the types of the electrical loads 21, 22, .... Needless to say, there is a case where a part of the measurement units 41, 42, ... is made to correspond to plural types of electrical loads of the electrical loads 21, 22, ..., and therefore, there is a case where in another part of the measurement units 41, 42, ..., types of corresponding electrical loads, ... cannot be clearly determined. However, it can be considered that the measurement units 41, 42, ... are approximately made to correspond to the types of the electrical loads 21, 22, ..., respectively.

In order to utilize this relationship, the energy management device 10 further includes a type storage unit 15 configured to store information that the branch lines 31, 32, ... (that is, the measurement units 41, 42, ...) are made to correspond to the types of the electrical loads 21, 22, ..., respectively. It is preferred that a relationship between each of the branch lines 31, 32, ... and a corresponding electrical load of the electrical loads 21, 22, ... is registered in the type storage unit 15 through an operation part (not shown) (e.g., a touch panel provided together with the display device 20) provided in the energy management device 10. Alternatively, this information may be registered in the type storage unit 15 through an external device, such as a personal computer. For this case, the energy management device 10 preferably includes an interface device to which the external device is connected.

The type storage unit 15 is nonessential. In a case where the energy management device 10 includes the type storage unit 15, it is preferred that the history storage unit 12 is configured to store not only the power usage amount, the time and the date for each of the branch lines 31, 32, ..., but also the type of the corresponding electrical load of the electrical loads 21, 22, ... extracted from the type storage unit 15.

If the energy management device 10 manages a space in a residence, it is also possible that the branch lines 31, 32, ... are made to correspond to not the types of the electrical loads 21, 22, ... but rooms of the residence. In this case, changes in the power usage amounts for each room are stored in the history storage unit 12. In the following explanation, a case is assumed where each of the plurality of power usage amounts stored in the history storage unit 12 is made to correspond to: a time and date when acquired; an electrical load of the electrical loads 21, 22, ...; a branch line of the branch lines 31, 32, ...; and a room. Here, when the power usage amount is stored in the history storage unit 12, data including all of the corresponding electrical load, branch line and room is not necessarily stored, and data including one or more selected from those may be appropriately stored.

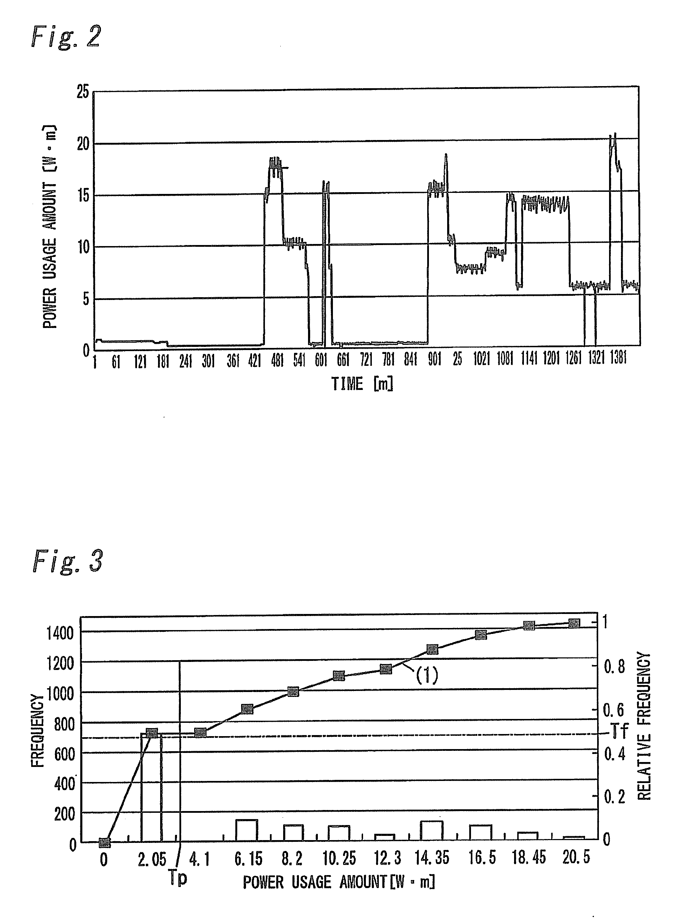

Hereinafter, the present embodiment will be specifically explained. Fig. 2 shows an example of changes in the power usage amounts for a day (a predetermined target period) acquired by the acquiring unit 11 in a branch line of the branch lines 31, 32, ... that is made to correspond to a single room (e.g., a living room). In the shown example, one day is divided into sections of 0 to 1440, each of which has a width of one minute, and presented. In a case where information shown in Fig. 2 is stored in the history storage unit 12, the analyzing unit 13 is configured to calculate a frequency distribution of the power usage amounts, as shown in Fig. 3.

In the example shown in Fig. 3, the power usage amounts are divided into sections, each of which has a width of 2.05W·m, and a frequency in each section is shown with respect to the power usage amounts acquired for a day. Further, the analyzing unit 13 is configured to calculate a relative frequency in each section for the power usage amount, based on the frequency distribution. In Fig. 3, each numerical value of a vertical axis in the left side denotes a frequency, and each numerical value of a vertical axis in the right side denotes a relative frequency, and a characteristic (1) denotes a cumulative relative frequency.

Here, except for an electrical load, such as a refrigerator, which is always in an on-state, in many cases, a condition is satisfied that using periods of the electrical loads 21, 22, ... (that is, periods during which those are in on-states) are sufficiently shorter than non-using periods thereof (that is, periods during which those are in off states). In addition, even if electric power is consumed during the non-using period, it is only standby power, and accordingly, it can be said that the power usage amount during the non-using period is sufficiently smaller than that during the using period.

Based on such a knowledge, the analyzing unit 13 of the present embodiment is configured to define a small power usage amount which is not generated during the using periods of the electrical loads 21, 22, ..., as a power threshold Tp (see Fig. 3), and calculate the relative frequency of the power usage amount that is equal to or less than the power threshold Tp. It can be considered that when being equal to or less than the power threshold Tp, the power usage amount corresponds to an amount of the standby power. Therefore, the analyzing unit 13 is configured to determine that the power usage amount is the amount of the standby power, when the power usage amount is equal to or less than the power threshold Tp and the relative frequency thereof is sufficiently large. The power threshold Tp is a little larger than an upper limit of the power usage amount that is considered as the amount of the standby power, and is an amount of the power that is not generated during the using periods of the electrical loads 21, 22, ..., and therefore is set to 3W·m or the like for example.

Further, because there is a possibility that the power usage amounts in sections smaller than the power threshold Tp correspond to the standby power, the analyzing unit 13 is configured to compare the relative frequency with a prescribed frequency threshold Tf (see Fig. 3), and determine that a specific power usage amount, in which the relative frequency is equal to or more than the frequency threshold Tf, is an amount of power which has been consumed during the non-using period. The frequency threshold Tf is set for determining whether each of the electrical loads 21, 22, ... is during the using period or the non-using period. As described above, since it can be considered that the non-using period is sufficiently longer than the using period, the frequency threshold Tf is set to 0.5 or the like for example.

As described above, in the frequency distribution, when the power usage amount in a section is the power threshold Tp or less and the relative frequency in the section is the frequency threshold Tf or more, the analyzing unit 13 is configured to estimate that the power usage amount in the section corresponds to the amount of the standby power. In short, because the relative frequency of the power usage amount in each section can be determined as a generation probability of the power usage amount presented in the section, when the generation probability is large, the analyzing unit 13 estimates that the power usage amount of the corresponding electrical load of the electrical loads 21, 22, ... corresponds to the amount of the standby power.

In the example shown in Fig. 3, regarding a section of 2.05W·m in which the power usage amount is equal to or less than the power threshold Tp, the relative frequency thereof is more than the frequency threshold Tf, and therefore it is determined that this section corresponds to the standby power. Here, instead of determining with the frequency threshold Tf, the analyzing unit 13 may be configured to estimate that a target section corresponds to the standby power, based on a point that the relative frequency in the target section is sufficiently larger than that in the other sections and the relative frequency in a section of 0W·m is a negligible frequency (in the figure, the relative frequency is 0). That is, in the example shown in Fig. 3, it is determined that the power usage amount in the section of 2.05W·m corresponds to the amount of the standby power.

In the example described above, it is determined with the relative frequency, however, the analyzing unit 13 may be configured to compare the cumulative relative frequency with the frequency threshold Tf in the order starting from the lower limit side of the power usage amount, and estimate that the power usage amount at the point of time when the cumulative relative frequency exceeds the frequency threshold Tf corresponds to the amount of the standby power. In this case, setting of the power threshold Tp is not required, and accordingly, it is possible to estimate the standby power more easily.

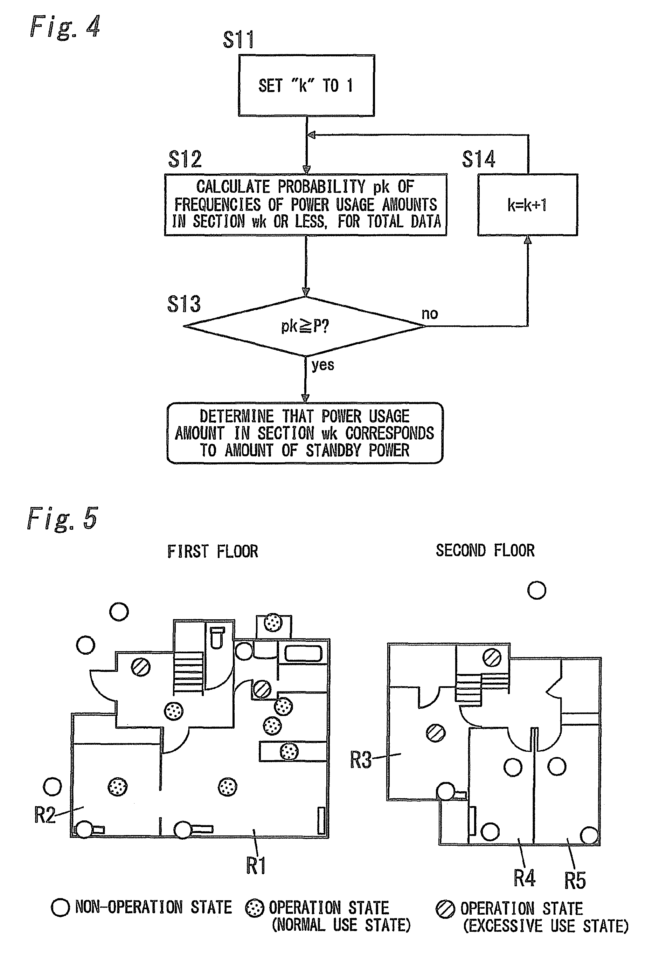

Fig. 4 shows a procedure of determining the standby power in the analyzing unit 13. The procedure shown in Fig. 4 shows, as an example, that the standby power is estimated by comparing a generation probability corresponding to the cumulative relative frequency with a probability threshold P corresponding to the frequency threshold Tf, in a state where the frequency distribution of the power usage amounts has been already calculated by the analyzing unit 13. When receiving a frequency Mk (k=1, 2, ...) in each section wk (k=1, 2, ...) of the power usage amount, the analyzing unit 13 calculates a generation probability p1 with a frequency M1 in a section w1 in which the power usage amount is minimum (S11, S12). As shown in the following Formula 1, the generation probability pk is represented as a percentage of a value obtained by integrating frequencies in sections wk (k=1, 2, ...) selected in the order starting from a lower side of the power usage amount, and dividing the integrated value by a total N of all frequencies in the power usage amounts. In Formula 1, "j" denotes the number of the selected sections. Therefore, the generation probability **p1** is obtained by "p1 = (M1 / N)×100".

[Formula 1]

$$pk = \left( \frac{\displaystyle\sum_{k=1}^{j} Mk}{N} \right) \times 100$$

The generation probability pk is compared with the probability threshold P that has been previously set (S13). If the generation probability pk is less than the probability threshold P (S13: no), a frequency Mk in a section wk in which the power usage amount is the second smallest is added (S14), and the processing is returned to the step S12 and a generation probability pk thereof is calculated and this generation probability pk is compared with the probability threshold P (S13). For example, if the generation probability p1 is less than the probability threshold P, a frequency M2 in a section w2 is added and a generation probability p2 is obtained by "p2 = {(M1 + M2) / N}×100". The analyzing unit 13 performs the above-mentioned operation appropriate times, and then if the generation probability pk is equal to or more than the probability threshold P (S13: yes), it is determined that the power usage amount in the obtained section wk corresponds to the amount of the standby power (S15).

It is possible to obtain the standby power for each of the branch lines 31, 32, ... through the above-mentioned technique. In the operation shown in Fig. 4, it is determined without the power threshold Tp, however, it is preferable that the upper limit of the section wk to be selected is set with the power threshold Tp, when obtaining the standby power. Even if an electrical load of the electrical loads 21, 22, ..., is an apparatus, such as a refrigerator, being always in an on-state, and is connected to a branch line of the branch lines 31, 32, ..., a possibility of incorrectly determining that the electric power required for operating the electrical load is the standby power can be reduced by setting the upper limit of the section wk to be selected.

It is preferred that the power threshold Tp is set according to the types of the electrical loads 21, 22, ... respectively corresponding to the branch lines 31, 32, ..., stored in the type storage unit 15. That is, because the standby power is generally determined according to the types of the electrical loads 21, 22, ..., it is possible to define the power threshold Tp as an upper limit value of the power usage amount corresponding to the standby power, based on information relating to the types of the electrical loads 21, 22, .... In a case where the types of the electrical loads 21, 22, .., are already known, the power threshold Tp may be set except for a refrigerator or the like.

As shown in Fig. 5, it is preferred that contents displayed by the display device 20 include a floor plan of rooms R1, R2, ... and images of the electrical loads 21, 22, ... arranged in the rooms R1, R2, .... Positions of the electrical loads 21, 22, ... are designated by coordinates in the floor plan. It is preferred that a relationship between the floor plan indicating arrangements of the rooms R1, R2, ... in a building, and the electrical loads 21, 22, ... or the branch lines 31, 32, ... is previously set in the output processing unit 14 in order to make the display device 20 display the floor plan. Setting of such information in the output processing unit 14 is performed with a touch panel used together with the display device 20, or an external device such as a personal computer connected to an interface device, as well as the type storage unit 15. Each of the electrical loads 21, 22, ... or each of the rooms R1, R2, ... is made to correspond to the power usage amount obtained for each of the measurement units 41, 42, ... through the relationship with the branch lines 31, 32, ....

In a case where the floor plan as shown in Fig. 5 is displayed on the screen of the display device 20, it is preferred that a magnitude of the standby power for each of the rooms corresponding to the branch lines 31, 32, ... is made to correspond to the image of the room, and displayed. The magnitude of the standby power may be indicated by a numerical value, a bar graph, or another shape (e.g., circle shape, a star shape or a mascot). In the case where the magnitude of the standby power is indicated by another shape, a size of the shape may be changed depending on the magnitude of the standby power.

Here, the analyzing unit 13 is configured to determine not only whether or not the power usage amount corresponds to the standby power, but also whether or not a corresponding electrical load of the electrical loads 21, 22, ... is in operation, based on the power usage amount acquired by the acquiring unit 11. That is, when the power usage amount acquired by the acquiring unit 11 is sufficiently more than the amount of the standby power (for example, several times or more of the amount of the standby power), the analyzing unit is configured to determine that the corresponding electrical load of the electrical loads 21, 22, ... is in operation, which is connected to a branch line of the branch lines 31, 32, ... at which the power usage amount has been measured.

Further, the analyzing unit 13 of the present embodiment is configured to evaluate the magnitude of the power usage amount acquired by the acquiring unit 11, as a use state of a corresponding electrical load of the electrical loads 21, 22, .... A reference of evaluating the magnitude of the power usage amount is set as a power usage rate by a user. The analyzing unit 13 is configured to determine that operation of a corresponding electrical load of the electrical loads 21, 22, ... does not contribute to energy saving (that is, the energy exceeds a target that has been set by the user) and notify the user of the result, when the power usage amount exceeds a power reference value defined through the power usage rate. That is, the analyzing unit 13 is configured to determine that the power usage amount is excessive, when the power usage amount exceeds the power reference value.

The power usage rate is set by the user, as a rate (a percentage) of the power usage amount to an upper limit value thereof (a maximum power usage amount). For example, when the maximum power usage amount is 25W·m and the user sets the power usage rate to 80%, the power reference value is 20W·m (= 25W·m×80%). The analyzing unit 13 notifies through the display device 20, when the power usage amount for each measurement time exceeds the power reference value. As an example, in the case of Fig. 2, because the power usage amount near the right end exceeds 20W·m, the analyzing unit notifies in this state. Instead of being set with the maximum power usage amount previously set for the branch lines 31, 32, ..., the power reference value may be calculated from a result value of the power usage amount.

As described above, it is possible to allow the user to recognize that the target is not achieved, through notifying that the power usage amount acquired by the acquiring unit 11 exceeds the power usage rate set as a target value by user. In other words, it is possible to allow the user to recognize that it exceeds the target for the power usage amount set by the user. Further, as shown in Fig. 5, in the case where the floor plan is displayed on the screen of the display device 20, graphics or colors may be selectively presented for the rooms R1, R2, ... corresponding to the branch lines 31, 32, ..., in order to attract the user's attention when the power usage amount exceeds the power usage rate. In Fig. 5, as an example, the positions of the electrical loads 21, 22, ... (including outlets) are indicated by circle marks in the floor plan, and a color of the mark is changed (that is, the mark with hatching) when the power usage amount exceeds the power usage rate.

In the above-mentioned configuration, the measurement units 41, 42, ... are arranged at the branch lines 31, 32, ..., respectively, and accordingly, it is possible to set, to the maximum power usage amount, a total of the maximums of the power usage amounts respectively defined for the branch lines 31, 32, ... . Here, if possible, the above-mentioned processing may be performed, through defining the maximum power usage amount for the main line and measuring the power usage amount at the main line. Also, it is possible to set the maximum power usage amount, based on capacities of breakers arranged in the distribution board.

The maximum power usage amount, the power usage rate and the power reference value are registered, as setting information, in a setting information storage unit 16 that is provided in the energy management device 10. Setting of such information in the setting information storage unit 16 is performed with an operation part (not shown), or an external device such as a personal computer, as well as the type storage unit 15.

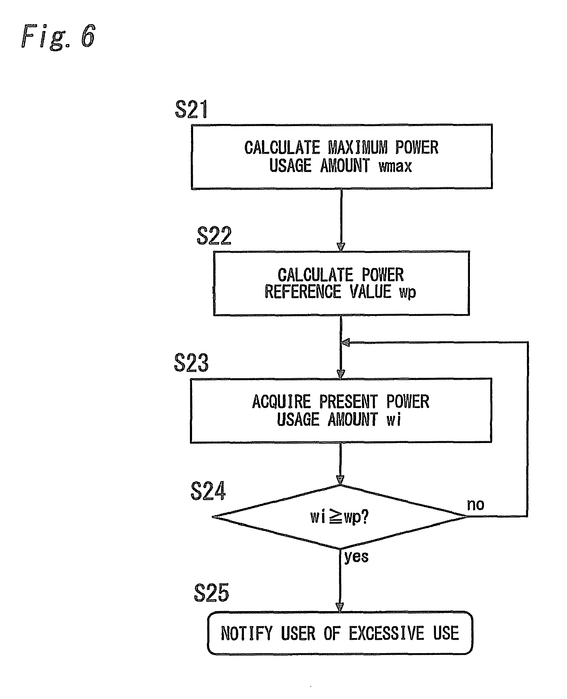

Fig. 6 shows operation of the analyzing unit 13 in the above matter. In the example shown in the figure, the analyzing unit 13 calculates a maximum power usage amount wmax from changes in past power usage amounts stored in the history storage unit 12 (S21). Further, a power reference value wp is set through the calculated maximum power usage amount wmax and a power usage rate k that is previously set (where wp = wmax×k) (S22). After setting of the power reference value wp, the analyzing unit 13 acquires a power usage amount wi one after another through the acquiring unit 11 (S23), and compares the acquired power usage amount wi with the power reference value wp (S24). In the step S24, while the measured power usage amount wi is less than the power reference value wp (S24: no), the analyzing unit acquires the power usage amount wi one after another (S23). When the measured power usage amount wi is equal to or more than the power reference value wp (S24: yes), the analyzing unit makes the display device 20 notify the user of this (S25). That is, the display device 20 notifies the user of excessive use of the electric power.

As described above, the energy management device sets the power reference value through the power usage rate that is previously set by the user, and accordingly, the user can set a target reduction rate for the past power usage amount (the maximum power usage amount). Further, when the power usage amount exceeds the power reference value that is set as a target, the display device 20 notifies the user of this, and accordingly, it is possible to make the user conscious of achieving the target about the reduction rate for the electric power, through attracting the user's attention.

(Second Embodiment)

In the First Embodiment, the energy management device has a configuration that detects the standby power with the changes in the power usage amounts during the predetermined target period, and further compares the power usage amount with the power reference value based on the power usage rate that is set by the user, and attracts the user's attention when the power usage amount exceeds the power reference value.

In the present embodiment, a case will be explained where an energy management device has a configuration of not only notifying that the power usage amount exceeds the power reference value, but also automatically reducing the power usage amount of an electrical load of electrical loads 21, 22, ... so as to limit a peak value of the power usage amount. This type of function is called "peak-cut". The peak-cut is performed for suppressing not only an increase in the power usage amount but also an increase in electricity rate. That is, in a case where an electricity rate system contracted with an electric power supplier (an electric power company) is "meter rate lighting", the electricity rate is increased if the power usage amount is increased, and therefore, it is preferred that an upper limit is provided for the power usage amount.

Therefore, in order to perform the peak-cut, it is required to define a peak-cut value, as the upper limit for the power usage amount, and suppress an output of a part of the electrical loads 21, 22, ... to reduce the power usage amount when the power usage amount reaches the peak-cut value. The peak-cut value is registered, as setting information, in a setting information storage unit 16. Setting of the peak-cut value in the setting information storage unit 16 is performed with an operation part (not shown), or an external device such as a personal computer, as well as the case of the type storage unit 15.

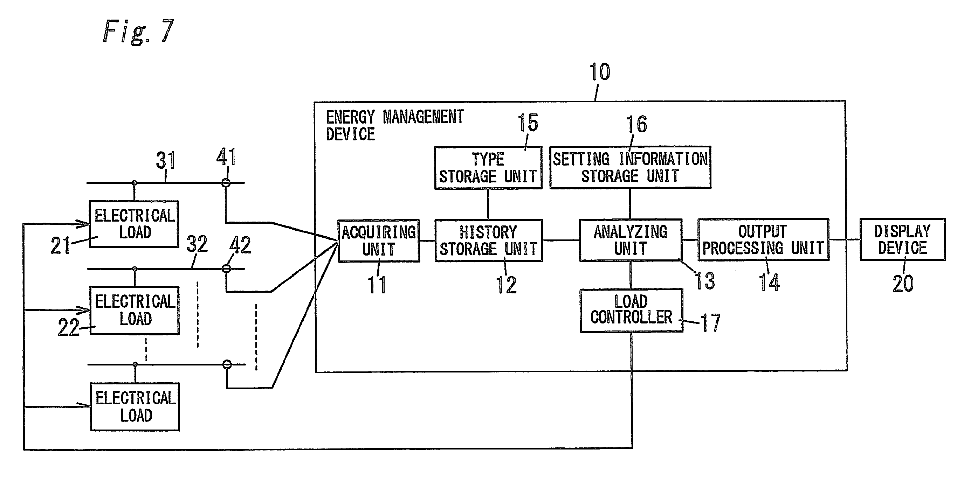

As shown in Fig. 7, an energy management device 10 of the present embodiment further includes a load controller 17 that is configured to control operation of each of the electrical loads 21, 22, .... An analyzing unit 13 is configured to compare a power usage amount at a main line (or a total of power usage amounts at branch lines 31, 32, ...) acquired by an acquiring unit 11 with the peak-cut value registered in the setting information storage unit 16. The analyzing unit 13 is configured to instruct the load controller 17 to suppress an output of an appropriate electrical load of the electrical loads 21, 22, ... when determining that the power usage amount acquired by the acquiring unit 11 has reached the peak-cut value.

In order to suppress the output of the appropriate electrical load of the electrical loads 21, 22, ..., the load controller 17 controls the operation thereof in a direction of reducing the power usage amount. This control includes not only a case of selecting the operation state for reducing the power usage amount, but also a case of stopping the operation of the appropriate electrical load of the electrical loads 21, 22, .... For example, if the appropriate electrical load of the electrical loads 21, 22, ... is a lighting load, the output may be suppressed through dimming. If the appropriate electrical load of the electrical loads 21, 22, ... is an air conditioning load, the output may be suppressed through changing setting temperature. That is, the load controller 17 is configured to adjust the optical output of the lighting load, the setting temperature of the air conditioning load, or the like. Further, the load controller 17 is configured to be capable of instructing each of the electrical loads 21, 22, ... to be in ON or OFF state.

The load controller 17 may be instruct the electrical loads 21, 22, ... by wire. However, from viewpoint of construction, it is preferred that the instruction is performed by wireless. In a case where the electrical loads 21, 22, ... are instructed to be operated by a remote control apparatus using an infrared ray as a transmission medium, the load controller 17 may be configured to have the same function as the remote control apparatus. Further, if the electrical loads 21, 22, ... are network apparatuses, the load controller 17 may be configured to be capable of communicating with the network apparatuses. As a line through which the load controller 17 instructs each of the electrical loads 21, 22, ..., a power distribution network may be utilized, through a power line carrier communication technology.

Here, there is a possibility to impair comfort that has been obtained by use of electric power when performing the peak-cut. That is, there is a case where it is difficult to keep both reducing of the power usage amount and ensuring of the comfort. On the other hand, if an electrical load of the electrical loads 21, 22, ... is a lighting apparatus or a video apparatus (a television receiver or the like), there is case where the power is continuously applied to the apparatus even while the apparatus is not utilized actually. In such a case, it means that the electric power is consumed wastefully.

The analyzing unit 13 further has a function of selecting, from the electrical loads 21, 22, ..., an electrical load of which the output is suppressed to reduce the power usage amount without largely impairing the comfort, when the peak-cut is required due to the increase in the power usage amounts of the electrical loads. Therefore, the analyzing unit 13 is configured to determine whether or not the electrical loads 21, 22, ... are being used, and make a display device 20 present a candidate selected from the electrical loads 21, 22, ..., which is not being used, via an output processing unit 14.

The use states of the electrical loads 21, 22, ... (that is, whether or not the loads are being wastefully used) are determined with the power usage amount for each of the branch lines 31, 32, .... As explained in the First Embodiment, in many cases, the branch lines 31, 32, ... have the corresponding relationship with rooms, and it can be considered that there is a high possibility that a person exists in a room corresponding to a branch line, ..., in which the power usage amount is large, of the branch lines 31, 32, .... Here, examples of the corresponding relationship between the branch lines 31, 32, ... and the rooms includes one-to-one relationship, and many-to-one relationship in which branch lines are made to correspond to a single room. Because a possibility that a single branch line is made to correspond to rooms is low, basically it can be said that each of the branch lines 31, 32, ... is made to correspond to a room. This corresponding relationship is stored in the type storage unit 15. The power usage amounts at the branch lines 31, 32, ... measured by the measurement units 41, 42, ... are summarized, as the power usage amount for each room, by the analyzing unit 13.

The analyzing unit 13 is configured to compare the power usage amounts for rooms with each other, through the power usage amounts at the branch lines 31, 32, ..., when the power usage amount at the main line (or the total of the power usage amounts at the branch lines 31, 32, ...) reaches the peak-cut value, and determine that a person exists in a room in which the power usage amount is large. Here, as explained in the First Embodiment, an appropriate threshold is set for the power usage amount at each of the branch lines 31, 32, ..., and the analyzing unit is configured to determine that a corresponding electrical load of the electrical loads 21, 22, ... is in operation, when the power usage amount thereof exceeds the threshold. That is, the threshold is set for distinguishing the power usage amount by the electrical load being in operation, from the amount of the standby power consumed by the other electrical loads of the electrical loads 21, 22, ....

Here, if configured to select only a room in which the power usage amount is the largest, even when persons actually exist in other rooms, the analyzing unit may incorrectly determine that the persons do not exist in the other rooms. So, the analyzing unit 13 is configured to arrange the power usage amounts for the rooms in the order starting from the larger side of the power usage amount, and determine that persons exist in rooms in which power usage amounts are the above-mentioned threshold or more.

The analyzing unit 13 is configured to, when detecting a room where a person exists, extract, from the electrical loads 21, 22, ..., an electrical load that is being used in a room where absence of a person is determined.

Here, the analyzing unit is configured to determine whether or not each of the electrical loads 21, 22, ... is being used, through a difference between the power usage amount and the amount of the standby power. That is, when the difference obtained by subtracting the standby power from the power usage amount is a defined threshold or more, it is determined that the corresponding electrical load of the electrical loads 21, 22, ... is in operation. In a case of performing the peak-cut, the analyzing unit 13 selects a target electrical load from electrical loads that are arranged in a room in which the absence of a person has been determined, and make the load controller 17 instruct the selected target electrical load to suppress the output thereof.

For example, it is assumed that air conditioners in a Japanese-style room and a living room are in operation, and performing of the peak-cut is required. In this case, if the power usage amount at a branch line corresponding to the living room, of the branch lines 31, 32, ... is more than that at a branch line corresponding to the Japanese-style room, of the branch lines 31, 32, ... , the analyzing unit 13 estimates that a person exists in the living room. Because the power usage amount corresponding to the Japanese-style room is less than that corresponding to the living room, there is a possibility that no person exists in the Japanese-style room. Further, even if persons actually exist in the Japanese-style room, it is estimated that the number of the persons in the Japanese-style room is less than that in the living room. Therefore, the analyzing unit 13 makes the load controller 17 instruct the air conditioner in the Japanese-style room to reduce the output thereof.

That is, since the analyzing unit does not provide an instruction to reduce the output of the air conditioner in the living room in which a person exists, it possible to prevent from impairing the comfort, and further, since it is estimated that no person exists in the Japanese-style room, a possibility that a person feels unfulfilled is low, even if the load controller reduces the output of the air conditioner in the Japanese-style room. Here, it can be considered that even if persons exist in the Japanese-style room, the number of persons in the Japanese-style room is less than that in the living room, and accordingly, it can be said that the persons are less affected, even if the load controller reduces the output of the air conditioner in the Japanese-style room.

As described above, the analyzing unit 13 is configured to determine necessity of the peak-cut, with the changes in the power usage amounts in a main circuit. Further, the analyzing unit 13 is configured to detect electrical loads, which are in operation, of the electrical loads 21, 22, ..., with the changes in the power usage amounts at each of the branch lines 31, 32, ..., and further with the difference between the power usage amount and the standby power, and also determine presence or absence of a person in each room. Furthermore, the analyzing unit 13 is configured to determine the priority of the electrical loads in which the outputs thereof are suppressed to perform the peak-cut, with the changes in the power usage amounts. Therefore, even when performing the peak-cut to reduce the power usage amount in the main circuit, the analyzing unit suppresses the outputs of the electrical loads in the order starting from an electrical load with a higher possibility that electric power is being consumed wastefully. As a result, it is possible to perform the peak-cut without impairing the comfort. Other configurations and operations are similar to those of the First Embodiment.

(Third Embodiment)

In the Second Embodiment, the technique was explained, in which the energy management device determines whether or not electric power is being consumed wastefully, based on the power usage amount. On the other hand, in the present embodiment, a technique will be explained, in which an energy management device estimates the number of persons that are using electrical loads 21, 22, ..., based on the power usage amount, and estimates an electrical load, ... in which electric power is being consumed wastefully, based on the number of persons. In the present embodiment, when the number of persons existing in a space managed by an energy management device 10 is already known, and further the number of persons in the space estimated by the energy management device exceeds the already-known number of persons, the energy management device estimates that one or more of the electrical loads 21, 22, ... is being used wastefully. In the present embodiment, because performing automatically the peak-cut is not required, a case is explained where the energy management device 10 has configurations similar to that of the First Embodiment shown in Fig. 1, but the energy management device 10 may have configurations similar to that of the Second Embodiment shown in Fig. 7.

Hereinafter, it is assumed that the energy management device 10 manages a space in a residence. In the case where the energy management device 10 manages the space in the residence, the maximum number of persons being in the residence normally corresponds to the number of family members, and therefore, it can be said that the maximum number of persons is already known. The number of persons being actually in the residence is changed with lapse of time, but it can be considered that in the general residence the maximum number of persons remains unchanged, except for special days.

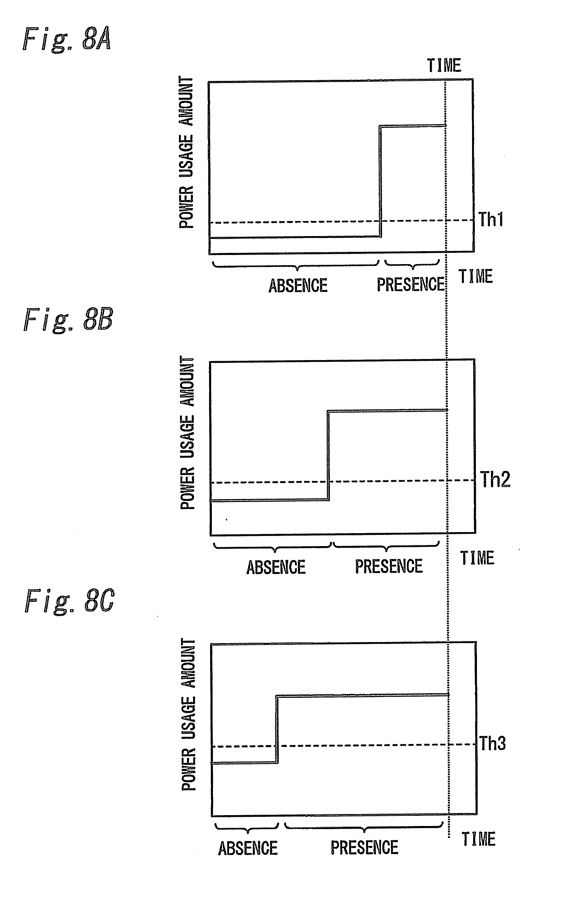

According to the technique explained in the First Embodiment, the standby power for each room is already known. Therefore, when the power usage amount acquired by an acquiring unit 11 exceeds the already-known standby power, an analyzing unit 13 is configured to determine that a corresponding electrical load of the electrical loads 21, 22, ... is being used. For example, as shown in Figs. 8A to 8C, determination thresholds Th1 to Th3 that are a little larger than the amount of the standby power are set in the analyzing unit 13 so as to be made to correspond to rooms respectively. That is, when the power usage amount acquired by the acquiring unit 11 exceeds a corresponding threshold of the determination thresholds Th1 to Th3, the analyzing unit 13 determines that an electrical load arranged in a corresponding room, of the electrical loads 21, 22, ..., is being used.

In the energy management device 10, already-known information (setting information for reference), such as the maximum number of persons in the residence, is previously registered in a setting information storage unit 16 in use. The analyzing unit 13 is configured to determine whether or not the electrical loads 21, 22, ... are being wastefully used, through the already-known information registered in the setting information storage unit 16.

As described above, the analyzing unit 13 is configured to compare the power usage amount acquired by the acquiring unit 11 with a corresponding threshold of the determination thresholds Th1 to Th3 to determine, for each room, whether or not the electrical loads 21, 22, ... are being wastefully used. Therefore, when the number of rooms in which the electrical loads 21, 22, ... are being used is more than the number of persons registered in the setting information storage unit 16, it is estimated that, in any rooms, any of the electrical loads 21, 22, ... are being wastefully used. The analyzing unit 13 is configured to instruct an output processing unit 14 to make a display device 20 present a list of rooms in which any of the electrical loads 21, 22, ... being used are arranged, when estimating that any of the electrical loads 21, 22, ... are being wastefully used. As a result, it is possible to direct the user's attention to the situation where any of the electrical loads 21, 22, ... are being wastefully used.

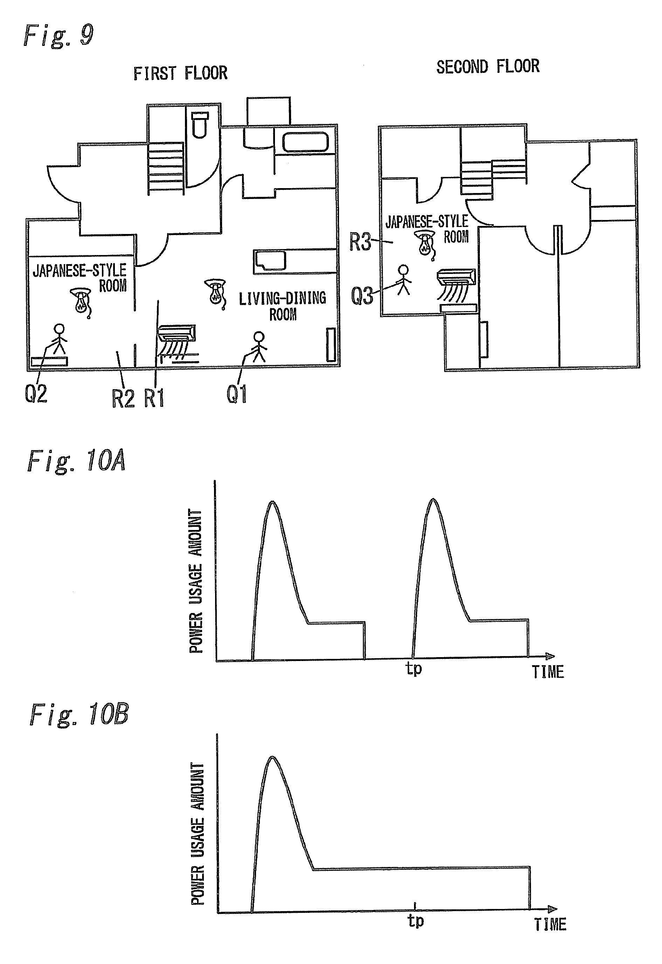

Fig. 9 shows an example of a case where a floor plan of the first floor and the second floor is displayed on the display device 20. In the example, marks Q1 to Q3 of human shapes are displayed on images of rooms where it is estimated that persons exist based on the power usage amount for each room. That is, in the shown example, the marks Q1 to Q3 are displayed on images of three rooms of a living-dining room R1, a Japanese-style room R2 and a bedroom R3, respectively, and accordingly, it is estimated that the number of persons determined based on the power usage amount is three. Here, in this residence, if the maximum number of persons registered in the setting information storage unit 16 is two, it means that the number of persons determined based on the power usage amount exceeds the registered number of persons.

That is, the analyzing unit 13 determines that any of the electrical loads 21, 22, ... are being wastefully used in any of the living-dining room R1, Japanese-style room R2 and bedroom R3, based on a relationship of magnitudes of the number of rooms in which electrical loads of the electrical loads 21, 22, ... are being actually used, and the number of persons registered in the setting information storage unit 16. When determining as above, the analyzing unit 13 determines that three rooms of the living-dining room R1, Japanese-style room R2 and bedroom R3 are candidates of rooms in which any of the electrical loads 21, 22, ... are wastefully in operation, and instructs the output processing unit 14 to make the display device 20 present the room names of the candidates.

According to the operations explained above, it is possible to make the user conscious of the situation where any of the electrical loads 21, 22, ... are being wastefully used. That is, attracting the user's attention causes the user to act so as to stop any of the electrical loads 21, 22, ... as needed. Other configurations and operations are similar to those of the First Embodiment or Second Embodiment. In addition, the present embodiment was explained based on the configurations of the First Embodiment, but may be combined with the configurations of the Second Embodiment.

(Fourth Embodiment)

An energy management device 10 of the present embodiment adopts any of the configuration of the First Embodiment shown in Fig. 1 and the configuration of the Second Embodiment shown in Fig. 7. Further, the energy management device 10 of the present embodiment has a function of estimating a utilization pattern of a user for each of electrical loads 21, 22, ... , with the changes in the power usage amounts stored in a history storage unit 12. Further, the energy management device 10 has a function of presenting advice to the user in a case of determining that there is an operation to contribute to energy saving more, based on the utilization pattern, when the user has operated to change operation of an electrical load of the electrical loads 21, 22, .... That is, in the present embodiment, when the user has operated to stop the operation of the electrical load, the energy management device is configured to compare a total amount of power usage amounts in a case of stopping the operation immediately, with a total amount of power usage amounts in a case of continuing the operation without stopping, and advise the user of an operation contributing to energy saving more.

The above-mentioned operation can be realized by using one of two types of techniques explained below, or a combination thereof. In a first technique of the techniques, the analyzing unit categorizes the electrical loads 21, 22, ... into two groups, based on a time change of the plurality of power usage amounts. Generally, it is known that as the electrical loads 21, 22, ..., there are an electrical load in which the power usage amount in an initial stage of starting is more than that in a steady stage, and an electrical load in which the power usage amount in the initial stage of starting is almost the same as that in the steady stage. For example, it is known that if an electrical load of the electrical loads 21, 22, ... is a heat apparatus, such as an air conditioner, the starting power in the initial stage of starting corresponds to several times or more of the steady power in the steady stage. On the other hand, in a case of a lighting apparatus including a light emitting diode, or the like, the starting power is almost the same as the steady power.

Considering the above-mentioned point, an analyzing unit 13 of the present embodiment is configured to compare the starting power with the steady power to categorize the electrical loads 21, 22, ... to groups. The starting power may be defined as a peak value of the power usage amounts within a prescribed period, after operation of each of the electrical loads 21, 22, ... is started. The steady power may be defined as an average value of the power usage amounts within a predetermined period, after the operation is started and then the prescribed period elapses. Alternatively, the starting power may be defined as a total amount of the power usage amounts within the prescribed period, after the operation is started. The steady power may be defined as a total amount of the power usage amounts within a period having the same length as the prescribed period, after the operation is started and then the prescribed period elapses and an appropriate period further elapses. The starting power and the steady power of each of the electrical loads 21, 22, ... are calculated with information stored in the history storage unit 12.

The analyzing unit 13 is configured to calculate the starting power and the steady power as explained above, and then calculate a ratio of the starting power to the steady power, and categorize the electrical loads 21, 22, ... into two groups, through categorizing into a case where the ratio is equal to or more than a prescribed value and a case where the ratio is less than the prescribed value. That is, the analyzing unit 13 is configured to categorize the electrical loads 21, 22, ... into two groups, based on a time change of the plurality of power usage amounts stored in the history storage unit 12. Hereinafter, regarding the electrical loads 21, 22, ..., an electrical load is referred to as a first electrical load, where the ratio of the starting power to the steady power is equal to or more than the prescribed value, and an electrical load is referred to as a second electrical load, where the ratio of the starting power to the steady power is less than the prescribed value.

Here, regarding the information stored in the history storage unit 12, when comparing the power usage amount for a day with that for another day, there is a case where it is possible to extract a pattern from a time change of the plurality of power usage amounts. For example, when analyzing the power usage amount at any of the branch lines 31, 32, ..., there is a possibility of finding an electrical load, in which the operation is stared at almost the same time every day, of the electrical loads 21, 22, .... In a case where such an electrical load (or a branch line) is extracted, it is possible to approximately specify a time when the user habitually utilizes such an electrical load. So, the analyzing unit 13 is configured to extract, as an estimated time, a time when a specific electrical load of the electrical loads 21, 22, ... is habitually utilized.

The estimated time is automatically extracted by the analyzing unit 13, or alternatively may be set by the user.

Here, the starting power consumed by the first electrical load is more than the steady power consumed by that. Therefore, as shown in Fig. 10A, when the operation is stopped immediately before an estimated time tp and is started again at the estimated time tp, relatively-large electric power is consumed by the first electrical load. As a result, for the first electrical load, a total amount of the power usage amounts in a case where the operation is continued as shown in Fig. 10B may be less than that in a case where the operation is stopped immediately before the estimated time tp as shown in Fig. 10A.

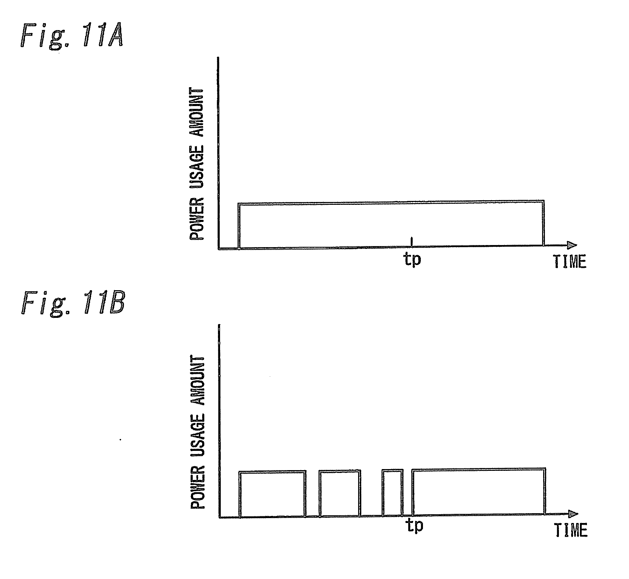

On the other hand, the starting power of the second electrical load is almost the same as the steady power thereof. As a result, a total amount of the power usage amounts in a case where the operation is stopped at least once before the estimated time tp as shown in Fig. 11B may be less than that in a case where the operation is started before the estimated time tp and continued as shown in Fig. 11A.

From the above, when the user operates to stop an electrical load of the electrical loads 21, 22, ... immediately before the estimated time tp, there is a possibility that the total amount of the power usage amounts is changed depending on whether the electrical load is the first electrical load or second electrical load, and whether the operation is immediately stopped or continued based on it. So, in the present embodiment, the analyzing unit 13 is configured to determine, when the stop of the first electrical load is instructed before the estimated time tp, which of the total amount of the power usage amounts in a processing of stopping the first electrical load and that in a processing of continuously operating it is less than the other. Here, depending on the function of each of the electrical loads 21, 22, ..., the total amount of the power usage amounts may be changed also according to a period between a time of receiving the instruction of the stop and the estimated time tp. Therefore, the analyzing unit 13 is preferably configured to determine an operation in where the total amount of the power usage amounts is less in consideration of also this period, depending on the type of each of the electrical loads 21, 22, ....

In a case where the user operates to stop an electrical load of the electrical loads 21, 22, ... before the estimated time tp, when determining that there is an operation contributing to energy saving more, according to the above-mentioned processing, the analyzing unit 13 instructs an output processing unit 14 to make a display device 20 present advice related to the operation. Therefore, when operating to stop the electrical load of the electrical loads 21, 22, ..., the user can obtain advice that there is an operation in where the total amount of the power usage amounts becomes less, through the display device 20, and accordingly, can select the operation of further reducing the total amount of the power usage amounts. In the case where the advice can be obtained through the display device 20, the operation of the electrical load of the electrical loads 21, 22, ... is continued until the user further operates to instruct the operation of the electrical load to response to the advice. Further, in order to perform the above-mentioned processing, it is necessary to reflect, in the energy management device 10, the user's operation for stopping the operation of the electrical load of the electrical loads 21, 22, ..., and accordingly, it is preferred that each of the electrical loads 21, 22, ... is capable of communicating with the energy management device 10.

In a second technique of the techniques, it is assumed that the electrical loads 21, 22, ... are mostly heat apparatuses (such as an air conditioner, a floor-heating apparatus and a bath apparatus with a heat insulating function). Operation of the heat apparatus is affected by thermal inertia in use environment, and accordingly, after changing setting content (mostly setting temperature), a time delay occurs until the environment's state actually reaches the set state. As a result, when an electrical load of the electrical loads 21, 22, ... is a heat apparatus, and the user uses the electrical load again after finishing the use thereof, there is a case where the continuous operation of the electrical load contributes to energy saving more than the operation stopped temporarily, depending on a period between a time when the previous use was finished and a time when the use is started again.

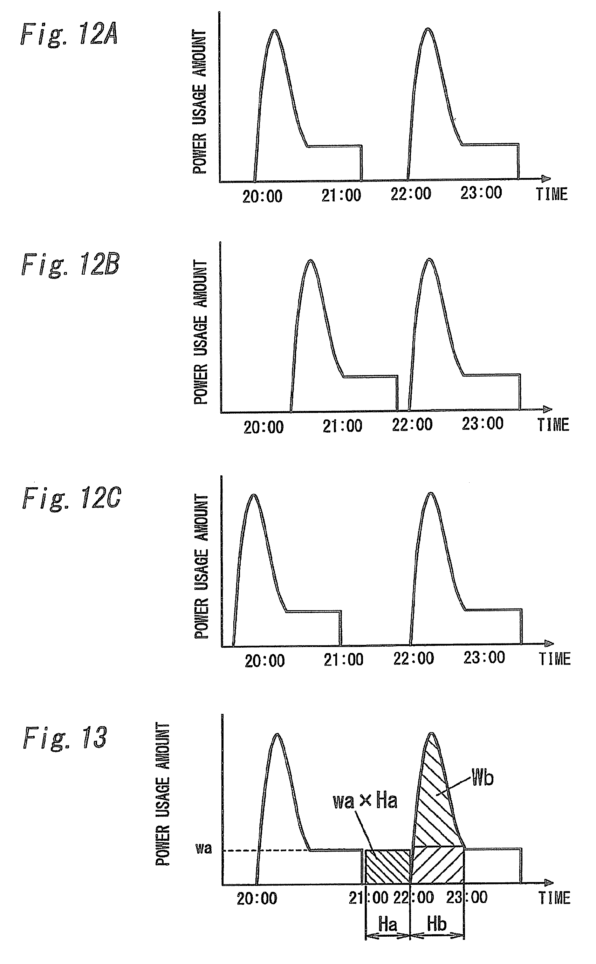

Now, it is assumed that with respect to the power usage amount of an air conditioner in a living room, data shown in Figs. 12A to 12C is stored in the history storage unit 12. Figs. 12A to 12C show power usage amounts for different days. Comparing the data shown in the figures with each other, it is found that the user tends to start the operation of the air conditioner at 22:00. As this example, the analyzing unit 13 is configured to extract the user's habit of using the electrical loads 21, 22, ..., through the data stored in the history storage unit 12. Here, if the user uses the air conditioner before 22:00, two processing can be considered: a processing of temporarily stopping the operation of the air conditioner and then starting the operation again at 22:00; and a processing of continuing the operation of the air conditioner without stopping. There is a possibility that a difference occurs between a total amount of the power usage amounts in the former processing, and that in the latter processing.

So, the analyzing unit 13 of the present embodiment is configured to estimate the total amount of the power usage amounts in the processing of temporarily stopping the operation, and that in the processing of continuing the operation, when the air conditioner is operated before 22:00 and further the user instructs the stop of the air conditioner. The analyzing unit 13 is further configured to compare the estimated two totals of the power usage amounts with each other, and advise the user of performing the processing in which the total amount of the power usage amounts is less. In the case of the example shown in Figs. 12A to 12C, when a period between a time when the user operated to stop the air conditioner and 22:00 is short as shown in Fig. 12B (e.g., about 10 minutes), the energy management device provides advice that a larger power-saving effect is obtained through continuing the operation of the air conditioner without stopping.

The advice by the analyzing unit 13 is presented by the display device 20 via the output processing unit 14. In order to perform this processing, for example, the analyzing unit 13 may output, to the output processing unit 14, a code corresponding to one of stop and continuation of the operation in which the power-saving effect is larger, and then the output processing unit 14 may extract a message corresponding to the code to make the display device 20 present it.

Processing in which the analyzing unit 13 estimates the total amount of the power usage amounts will be explained simply. As shown in Fig. 13, if an electrical load of the electrical loads 21, 22, ... is a heat apparatus, the power usage amount of the apparatus tends to be large immediately after the operation is started, and then the stage tends to shift to the steady stage where variation in the power usage amount is small when a period depending on thermal inertia in the use environment elapses. Here, "wa" denotes the power usage amount in the steady stage, and "Hb" denotes a period between a time of starting the operation of the electrical load of the electrical loads 21, 22, ... and a time when the stage shifts to the steady stage, and "ws" denotes a total amount of the power usage amounts during the period Hb. In addition, "Ha" denotes a period between a time of stopping the operation of the electrical load and a time of restarting the operation.

If continuing the operation of the electrical load of the electrical loads 21, 22, ... without stopping, the steady stage is continued even after a time point when the user tried to stop the operation, and further continued even after 22:00. Accordingly, a total amount W1 of the power usage amounts can be obtained by "W1 = wa×(Ha + Hb)", where "W1" denotes the total amount of the power consumed until a period (Ha + Hb) elapses after the time point when the user operated to stop the operation of the electrical load. On the other hand, in the case of restarting the operation of the electrical load of the electrical loads 21, 22, ... after stopping the operation, when estimating a total amount W2 of the power usage amounts, using a simplified model, it is represented by "W2 = Ws = wa×Hb + Wb", where "Wb" denotes a total amount of the power usage amounts obtained by subtracting, from a total amount of the power usage amounts during a period between a time of restarting the operation of the electrical load of the electrical loads 21, 22, ... and a time of shifting to the steady stage, a total amount "wa×Hb" of the power usage amounts when assuming that the operation is performed in the steady stage during the same period. That is, it is presented by "Wb = Ws - wa×Hb".

From the above-mentioned relationship, it can be said that if "W1 < W2" is satisfied, the total amount of the power usage amounts is less in the case where the operation is continued, and if "W1 > W2" is satisfied, the total amount of the power usage amounts is less in the case where the operation is restarted after stopped once. That is, it can be said that if "wa×Ha < Wb" is satisfied, the continuation of the operation enhances the power-saving effect more. In other words, it can be said that if a period between a time of stopping the previous operation of the electrical load of the electrical loads 21, 22, ... and an estimated time of restarting the operation thereof next is shorter than "Wb / wa", the continuation of the operation enhances the power-saving effect more.

The power usage amount wa in the steady stage, and the total amount Wb of the power usage amounts until the stage shifts to the steady stage depend on the use environment (e.g., an environmental temperature or the like) and an operation condition (e.g., a setting temperature or the like) of the electrical load of the electrical loads 21, 22, .... Accordingly, at a time point when the user operated to stop the operation of the electrical load of the electrical loads 21, 22, ..., the analyzing unit 13 can advise the user of an operation method of enhancing the power-saving effect more, depending on a period between the time point and an estimated time of restarting the operation. Other configurations and operations are similar to those of the First, Second or Third Embodiment. The configurations of the present embodiment may be combined with any of the First to Third Embodiments.

In the Third Embodiment, the technique explained is of determining whether or not the electrical loads 21, 22, ... are being wastefully used. In the present Fourth Embodiment, the technique explained is of detecting the operation for realizing the energy saving more. It is said that information detected by the technique in the Third or Fourth Embodiment is information that reflects the user's action or habit leading to an increase in the power usage amount. Accordingly, the user can obtain guidelines for action for realizing the energy saving more, through being conscious of this type of information.

So, preferably, the energy management device 10 further includes an information accumulation unit that is configured to accumulate information detected by at least one of the techniques in the Third and Fourth Embodiments. That is, the information accumulation unit is configured to store information that any of the electrical loads 21, 22, ... had been wastefully used, information that the energy management device advised the user to continue the operation when the user operated to stop the operation of any of the electrical loads 21, 22, ... , and the like. Then, the information accumulation unit is configured to store the above-mentioned detected information during an appropriate storage period (e.g., for 1 week, or 1 month). The information stored in the information accumulation unit may be displayed as a list on the display device 20. Alternatively, the analyzing unit 13 may classify the information by content thereof, and the classified result may be displayed on the display device 20.

By providing, to the user, the above-mentioned information obtained during the appropriate storage period, it is possible to notify the user of the user's action or habit that is contrary to the energy saving, and the user can obtain guidelines for action leading to the energy saving.

Further, because the acquiring unit 11 acquires the time change of the plurality of power usage amounts, the analyzing unit 13 can detect, for each of the branch lines 31, 32, ..., malfunction (including deterioration) of the electrical loads 21, 22, ..., through comparing a relationship between a magnitude and a time of the power usage amount with the past state (normally, an initial state).

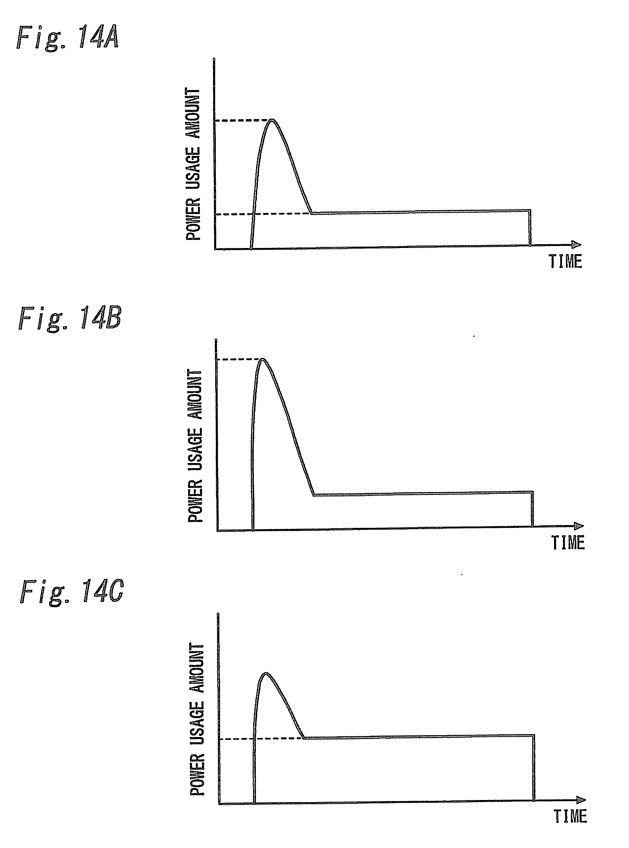

Here, in the initial state of an electrical load of the electrical loads 21, 22, ..., it is assumed that a time change of the plurality of power usage amounts has a characteristic as shown in Fig. 14A, until the stage shifts to the steady stage after starting. Further, it is assumed that a time change of the plurality of power usage amounts obtained at an appropriate timing has a characteristic as shown in Fig. 14B or Fig. 14C. For comparison of those characteristics, feature amounts extracted from those characteristics are compared with each other. Examples of the feature amount include a peak value of the power usage amount, the power usage amount in the steady stage, a period between a time of starting and a time of shifting to the steady stage, and the like.

For example, the characteristic in Fig. 14B has a larger peak value of the power usage amount than that in Fig. 14A, and the characteristic in Fig. 14C has a larger power usage amount in the steady stage than that in Fig. 14A. Therefore, it is possible to detect the malfunction or deterioration of each of the electrical loads 21, 22, ..., through setting, to a reference, a feature amount extracted from the characteristic such as the initial state as shown in Fig. 14A, and estimating a feature amount extracted from the characteristic obtained at the appropriate timing. The power usage amount acquired by the acquiring unit 11 is stored in the history storage unit 12, and accordingly, the analyzing unit 13 is configured to extract the feature amount with the time change of the plurality of power usage amounts stored in the history storage unit 12. Also, the analyzing unit 13 is configured to determine the presence or absence of the malfunction or deterioration of each of the electrical loads 21, 22, ..., based on the feature amount.

Preferably, the feature amount obtained from the characteristic as the reference is stored in the information accumulation unit. Because depending on a type of electrical loads of the electrical loads 21, 22, ..., the characteristic of the power usage amount may be changed according to a season or a day, it is preferred to match conditions used when comparing this type of the electrical loads with each other, as much as possible. Regarding the feature amount obtained from the characteristic as the reference, it may be not a feature amount extracted from a characteristic measured only once for a target electrical load of the electrical loads 21, 22, ..., but an average value of feature amounts extracted from characteristics measured a plurality of times.

Preferably, the above-mentioned energy management device 10 is accommodated together with the display device 20 in a single body that can be mounted on a wall or the like inside a room. The measurement units 41, 42, ... may be accommodated in a distribution board (not shown). Preferably, the energy management device 10 further includes an interface that receives values measured by the measurement units 41, 42, ....

It is not necessary that the display device 20 is arranged in the same body as the energy management device 10. The display device 20 may be arranged so as to be separable. In a case where the display device 20 is separated and arranged, the display device may use a display function that is included in a television receiver, a tablet terminal, a personal computer, or a smart phone. In this case, the output processing unit 14 of the energy management device 10 includes an interface for utilizing such a display device 20. In a case of using a personal computer that is provided with an interface for receiving the power usage amounts from the measurement units 41, 42, ..., this personal computer may be operated by a program of functioning as the energy management device 10.

Although the present invention has been described with reference to certain preferred embodiments, numerous modifications and variations can be made by those skilled in the art without departing from the true spirit and scope of this invention, namely claims.

**Claims**

1. An energy management device, comprising:

an acquiring unit configured to acquire, as a power usage amount, an amount of electric power for each prescribed measurement time, for each of feed lines through which electric power is fed to electrical loads, respectively; a history storage unit configured to store a plurality of power usage amounts for each of the feed lines so that each of the plurality of power usage amounts is made to correspond to a time and a date when acquired; an analyzing unit configured to calculate a frequency distribution of magnitudes of power usage amounts during a predetermined target period, of the plurality of power usage amounts for each of the feed lines stored in the history storage unit, and estimate that a specific power usage amount, in which a relative frequency is a prescribed frequency threshold or more, of the power usage amounts corresponds to an amount of standby power, the analyzing unit being configured to determine whether or not an electrical load corresponding to each of the feed lines is in operation by setting the estimated amount of standby power to a reference value and comparing the reference value with a magnitude of the power usage amount; and
an output processing unit configured to make a notification unit present a result determined by the analyzing unit.

2. The energy management device according to claim 1,
wherein the output processing unit is configured to display, on a display device, a floor plan of a space where the electrical loads are arranged, and display, in the floor plan, information relating to the power usage amount for each of the feed lines acquired by the acquiring unit.

3. The energy management device according to claim 1 or 2, further comprising a setting information storage unit in which setting information is set as a reference with respect to operation of each of the electrical loads,
wherein the analyzing unit is configured to determine a use state of each of the electrical loads, by comparing information extracted from the power usage amount acquired by the acquiring unit with the setting information set in the setting information storage unit.

4. The energy management device according to claim 3,
wherein the analyzing unit is configured to determine, as the use state, whether or not each of the electrical loads is being wastefully used, by comparing the information extracted from the power usage amount acquired by the acquiring unit with the setting information set in the setting information storage unit.

5. The energy management device according to claim 3 or 4,
wherein the setting information is a power reference value that is defined for the power usage amount, and
wherein the analyzing unit is configured to instruct, when the power usage amount acquired by the acquiring unit reaches the power reference value, the output processing unit to make the notification unit present a result.

6. The energy management device according to any one of claims 3 to 5, further comprising a load controller configured to control the operation of each of the electrical loads,
wherein the setting information is a peak-cut value that is defined for the power usage amount, and
wherein the analyzing unit is configured to instruct, when the power usage amount acquired by the acquiring unit reaches the peak-cut value, the load controller to control operation of a corresponding electrical load in a direction where the power usage amount is reduced.

7. The energy management device according to any one of claims 1 to 6,
wherein the analyzing unit is configured to:

extract, from the feed lines, a feed line to which an electrical load being in operation is connected, based on the power usage amount for each of the feed lines, acquired by the acquiring unit; and
instruct the output processing unit to make the notification unit present a space that is made to correspond to the extracted feed line.

8. The energy management device according to any one of claims 1 to 7, further comprising a type storage unit in which a type of a corresponding electrical load for each of the feed lines is registered,
wherein the analyzing unit is configured to:

predict an estimated time when operation of a specific type of an electrical load extracted with the type storage unit is habitually started, based on a time change of the plurality of power usage amounts stored in the history storage unit for a feed line to which the specific type of the electrical load is connected;
determine, in a case where the specific type of the electrical load has been instructed to be stopped before the estimated time, which of a total amount of power usage amounts in a processing of stopping the specific type of the electrical load and a total amount of power usage amounts in a processing of continuously operating the specific type of the electrical load is less than an other, based on a time difference between a time when the specific type of the electrical load has been instructed to be stopped and the estimated time; and
instruct the output processing unit to make the notification unit present the processing in which the total amount of the power usage amounts is less than the other.

9. The energy management device according to any one of claims 1 to 8,
wherein the analyzing unit is configured to:

categorize the electrical loads to which the electric power is fed through the feed lines respectively, into a first electrical load of which a magnitude of starting power is equal to or more than a prescribed value for steady power thereof and a second electrical load of which a magnitude of starting power is less than the prescribed value for steady power thereof, based on a time change of the plurality of power usage amounts stored in the history storage unit;

extract, as an estimated time, a time when the first electrical load is habitually utilized, based on a time change of the plurality of power usage amounts stored in the history storage unit for a feed line to which the first electrical load is connected;

determine, in a case where the first electrical load has been instructed to be stopped before the estimated time, which of a total amount of power usage amounts in a processing of stopping the first electrical load and a total amount of power usage amounts in a processing of continuously operating the first electrical load is less than an other; and

instruct the output processing unit to make the notification unit present the processing in which the total amount of the power usage amounts is less than the other.

10. The energy management device according to claim 8 or 9,

wherein the history storage unit is configured to: store a history of instructing by the analyzing unit the output processing unit to make the notification unit present the processing in which the total amount of the power usage amounts is less than the other; and retrieve the history.

11. The energy management device according to any one of claims 1 to 9,

wherein the analyzing unit is configured to: calculate a feature amount that is extracted from a time change of the plurality of power usage amounts for each of the feed lines; and compare the feature amount with a feature amount that is calculated before to detect presence or absence of malfunction in the electrical loads to which the electric power is fed through the feed lines respectively.

12. A program for making a computer function as:

an acquiring unit configured to acquire, as a power usage amount, an amount of electric power for each prescribed measurement time, for each of feed lines through which electric power is fed to electrical loads, respectively;

a history storage unit configured to store a plurality of power usage amounts for each of the feed lines so that each of the plurality of power usage amounts is made to correspond to a time and a date when acquired;

an analyzing unit configured to calculate a frequency distribution of magnitudes of power usage amounts during a predetermined target period, of the plurality of power usage amounts for each of the feed lines stored in the history storage unit, and estimate that a specific power usage amount, in which a relative frequency is a prescribed frequency threshold or more, of the power usage amounts corresponds to an amount of standby power, the analyzing unit being configured to determine whether or not an electrical load corresponding to each of the feed lines is in operation by setting the estimated amount of standby power to a reference value and comparing the reference value with a magnitude of the power usage amount; and

an output processing unit configured to make a notification unit present a result determined by the analyzing unit.

Fig. 1

Fig. 2

Fig. 3

*Fig. 4*

S11

SET "k" TO 1

S12

CALCULATE PROBABILITY pk OF
FREQUENCIES OF POWER USAGE AMOUNTS
IN SECTION wk OR LESS, FOR TOTAL DATA

S14

$k=k+1$

S13

$pk \geqq P?$

no

yes

DETERMINE THAT POWER USAGE
AMOUNT IN SECTION wk CORRESPONDS
TO AMOUNT OF STANDBY POWER

*Fig. 5*

FIRST FLOOR

SECOND FLOOR

R2

R1

R3

R4   R5

○ NON-OPERATION STATE   ⊙ OPERATION STATE
(NORMAL USE STATE)

⊘ OPERATION STATE
(EXCESSIVE USE STATE)

*Fig. 6*

S21

```
CALCULATE MAXIMUM POWER
    USAGE AMOUNT wmax
```

S22

```
    CALCULATE POWER
REFERENCE VALUE wp
```

S23

```
ACQUIRE PRESENT POWER
    USAGE AMOUNT wi
```

S24

$wi \geqq wp$?    no

yes

S25

NOTIFY USER OF EXCESSIVE USE

*Fig. 7*

10

ENERGY MANAGEMENT
DEVICE

15

TYPE
STORAGE UNIT

16

SETTING INFORMATION
STORAGE UNIT

31

41

ELECTRICAL
LOAD

21

32

42

ELECTRICAL
LOAD

22

ELECTRICAL
LOAD

ACQUIRING
UNIT

11

HISTORY
STORAGE UNIT

12

ANALYZING
UNIT

13

OUTPUT
PROCESSING UNIT

14

DISPLAY
DEVICE

20

LOAD
CONTROLLER

17

EP 2 746 787 A1

**Fig. 8A**

**Fig. 8B**

**Fig. 8C**

Fig. 9

FIRST FLOOR

SECOND FLOOR

JAPANESE-STYLE ROOM

LIVING-DINING ROOM

JAPANESE-STYLE ROOM

R3

Q3

Q2    R2 R1    Q1

Fig. 10A

POWER USAGE AMOUNT

tp    TIME

Fig. 10B

POWER USAGE AMOUNT

tp    TIME

*Fig. 11A*

*Fig. 11B*

*Fig. 12A*

*Fig. 12B*

*Fig. 12C*

*Fig. 13*

*Fig. 14A*

*Fig. 14B*

*Fig. 14C*

## INTERNATIONAL SEARCH REPORT

| International application No. |
| --- |
| PCT/JP2012/072404 |

| A. CLASSIFICATION OF SUBJECT MATTER |
| --- |
| G01R22/00(2006.01)i, H02J3/00(2006.01)i |

According to International Patent Classification (IPC) or to both national classification and IPC

| B. FIELDS SEARCHED |
| --- |

Minimum documentation searched (classification system followed by classification symbols)
G01R22/00, H02J3/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | JP 2011-59073 A (Panasonic Denko Sunx Tatsuno Kabushiki Kaisha), 24 March 2011 (24.03.2011), paragraphs [0038] to [0040] (Family: none) | 1-12 |
| A | JP 2002-189779 A (Kabushiki Kaisha Tokyo Energy Research), 05 July 2002 (05.07.2002), paragraphs [0088] to [0095]; fig. 24 (Family: none) | 1-12 |
| A | JP 2009-168726 A (Nippon Telegraph and Telephone Corp.), 30 July 2009 (30.07.2009), paragraphs [0062] to [0069]; fig. 4 (Family: none) | 1-12 |

| ☒ Further documents are listed in the continuation of Box C. | ☐ See patent family annex. |
| --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 03 December, 2012 (03.12.12) | Date of mailing of the international search report 11 December, 2012 (11.12.12) |
| --- | --- |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/072404

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2010-181159 A  (NEC Corp.),<br>19 August 2010 (19.08.2010),<br>paragraph [0145]<br>(Family: none) | 1-12 |
| A | JP 2011-160358 A  (Daiwa House Industry Co.,<br>Ltd.),<br>18 August 2011 (18.08.2011),<br>paragraph [0006]<br>(Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011160358 A